# FASCICULE DE BREVET EUROPEEN

(11) **EP 4 504 599 B1**
(45) Date de publication et mention de la délivrance du brevet: **11.06.2025**
(21) Numéro de dépôt: 24703735.1
(22) Date de dépôt: 02.02.2024
(51) Int. Cl.: B64F 1/223

(54) **BARRE DE REMORQUAGE POURVUE D'UN DISPOSITIF DE MOUVEMENT MÉCANIQUE DE SON TRAIN DE ROULAGE**
ANHÄNGERKUPPLUNG MIT EINER VORRICHTUNG ZUR MECHANISCHEN BEWEGUNG IHRES FAHRWERKS
TOW BAR PROVIDED WITH A DEVICE FOR MECHANICAL MOVEMENT OF ITS RUNNING GEAR

(30) Priorité: 02.02.2023 FR 2301011
(43) Date de publication de la demande: 12.02.2025
(73) Titulaire: Lledo industries, 13170 Les Pennes-Mirabeau (FR)
(72) Inventeur: La désignation de l'inventeur n'a pas encore été déposée
(74) Mandataire: A.P.I. Conseil
(86) Numéro de dépôt international: PCT/EP2024/052672
(87) Numéro de publication internationale: WO 2024/161033

(56) Documents cités:
- EP-A1- 3 584 174
- CN-B- 107 521 715
- US-B1- 8 939 461
- US-B2- 8 985 613

## Description

### Domaine technique

L'invention concerne le domaine des barres de remorquage pour aéronef. Des systèmes similaires sont connus du document EP3584174A1

### Technique antérieure

On sait qu'une barre de remorquage d'aéronef est un outil indispensable pour le déplacement d'un aéronef au sol. Cette barre comprend généralement un corps principal et un train de roulage qui permet le déplacement de la barre.

Habituellement, le train de roulage est conçu pour être verrouillé et déverrouillé lors des différentes étapes de l'opération de remorquage. Cependant, le processus de verrouillage et de déverrouillage peut être compliqué et laborieux.

Le mécanisme de verrouillage/déverrouillage actuel peut nécessiter l'utilisation de plusieurs outils ou l'application d'une force excessive, ce qui peut être difficile et chronophage pour l'opérateur.

En outre, le mécanisme de verrouillage/déverrouillage actuel peut ne pas être conçu pour être facilement actionné manuellement, ce qui peut rendre le positionnement précis du train de roulage plus difficile.

Lorsque le mécanisme de verrouillage/déverrouillage est difficile à utiliser, cela peut ralentir l'opération de remorquage et peut même rendre le mouvement de l'aéronef plus difficile.

En pratique, il est donc nécessaire d'avoir un mécanisme de verrouillage/déverrouillage qui soit à la fois efficace et facile à utiliser pour améliorer l'efficacité des opérations de remorquage.

Cependant, les solutions actuelles ne répondent pas de manière satisfaisante à ce besoin, d'où la nécessité d'une innovation dans ce domaine.

### Résumé de l'invention

L'invention vise à résoudre, au moins partiellement, ce besoin.

En particulier, la présente demande décrit une barre de remorquage qui est pourvue d'un dispositif de mouvement mécanique de son train de roulage, comme dans la revendication 1.

Les revendications dépendantes décrivent des modes de réalisation spécifiques de la présente demande.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente une première mise en œuvre de la barre de remorquage selon l'invention.
[Fig. 2] La figure 2 représente une deuxième mise en œuvre de la barre de remorquage selon l'invention.
[Fig. 3] La figure 3 représente une variation de la première mise en œuvre de la barre de remorquage selon l'invention.
[Fig. 4] La figure 4 représente une variation de la deuxième mise en œuvre de la barre de remorquage selon l'invention.
[Fig. 5] La figure 5 représente une première portion avant de la barre de remorquage selon l'invention.
[Fig. 6] La figure 6 représente une deuxième portion avant de la barre de remorquage selon l'invention.
[Fig. 7] La figure 7 représente une première portion intermédiaire de la barre de remorquage selon l'invention.
[Fig. 9] La figure 9 représente une première portion arrière de figure 4.
[Fig. 10] La figure 10 représente une deuxième portion arrière de figure 4.
[Fig. 11] La figure 11 représente une première tête d'accrochage selon l'invention.
[Fig. 12] La figure 12 représente une première variante d'une deuxième tête d'accrochage selon l'invention.
[Fig. 13] La figure 13 représente une deuxième variante d'une deuxième tête d'accrochage selon l'invention.

Les figures ne respectent pas nécessairement les échelles, et ce, à des fins d'illustration.

En outre, certains dessins sont présentés en couleurs et/ou en transparence, car leur représentation en noir et blanc est impossible. En particulier, les couleurs sont nécessaires dans certains dessins pour discerner des détails qui seraient perdus s'ils étaient présentés en noir et blanc.

### Description des modes de réalisation

### Remarques préliminaires

Afin de ne pas obscurcir la description et détourner le lecteur de la compréhension des enseignements de l'invention, nos explications n'iront pas au-delà de ce qui est considéré comme nécessaire pour la compréhension et l'appréciation des concepts sous-jacents de l'invention. En effet, les modes de réalisation illustrés dans la description sont, pour la plupart, composés d'éléments connus de la personne du métier.

### Objectif de l'invention

L'un des objectifs de cette invention est de fournir un mécanisme de verrouillage/déverrouillage manuel du train de roulage d'une barre de remorquage d'aéronef.

Pour cela, l'inventeur propose un dispositif mécanique d'indexation comprenant un mécanisme de commande, un mécanisme de maintien et un mécanisme de transmission pour verrouiller les différentes positions indexées du train de roulage.

En particulier, le déverrouillage et la libération du train de roulage peuvent être déclenchés manuellement en soulevant l'extrémité avant de la barre de remorquage et en actionnant le mécanisme de commande.

### L'invention : une barre de remorquage

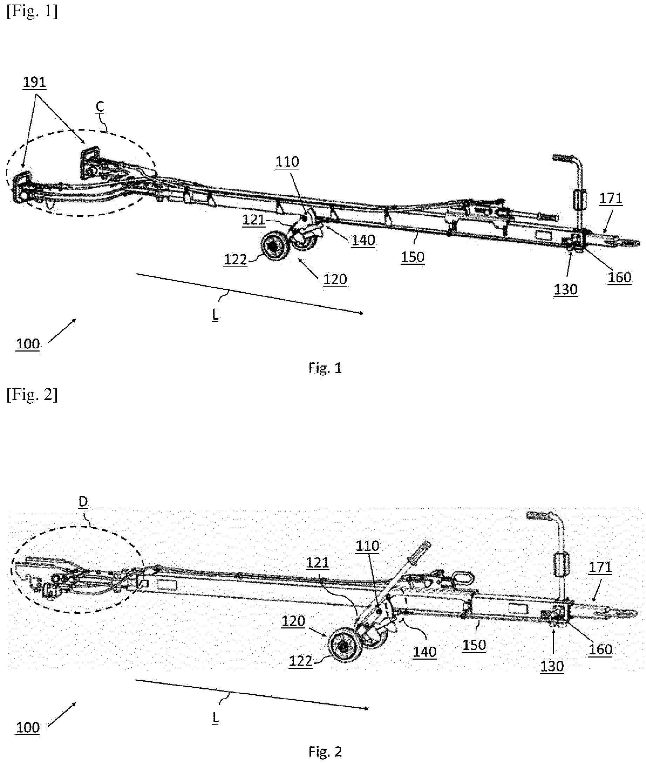

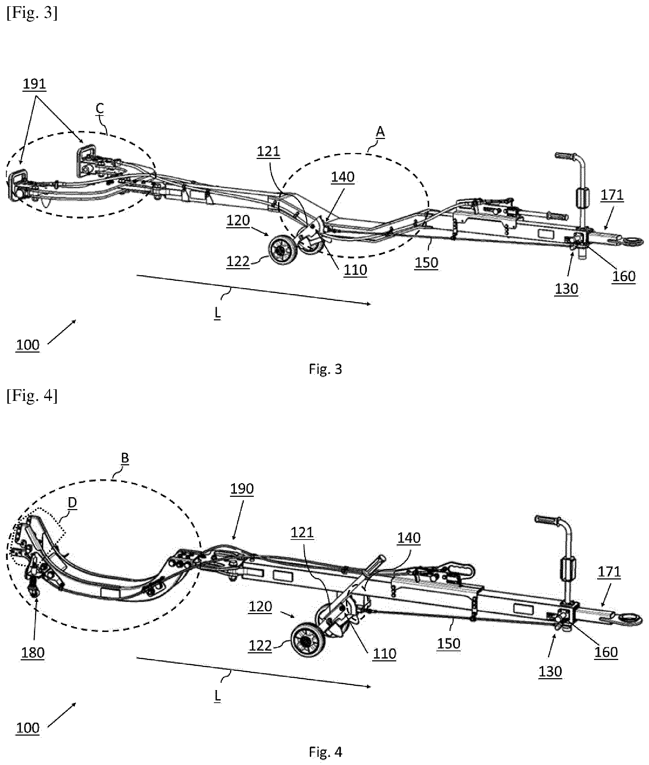

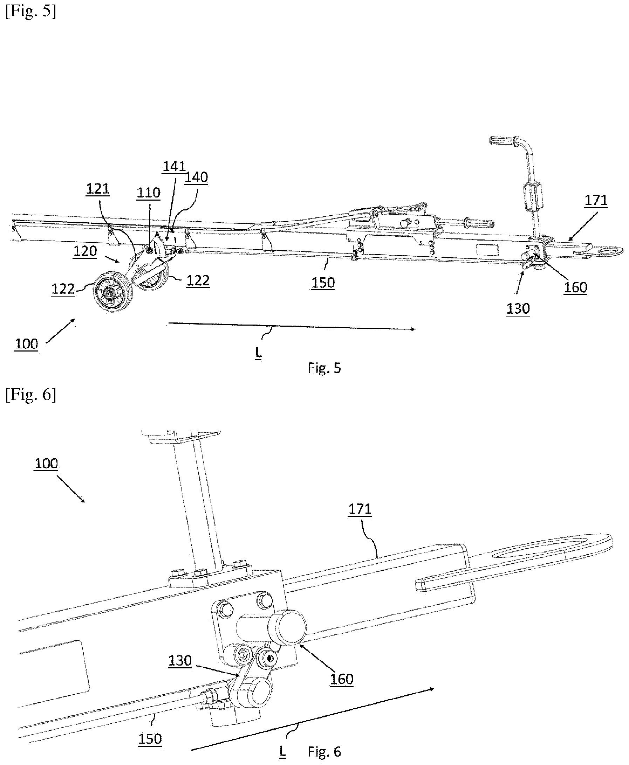

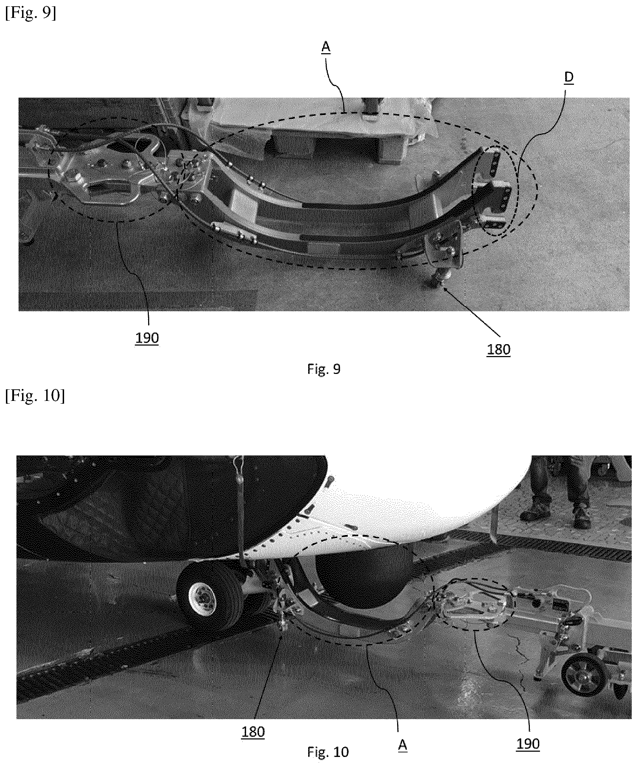

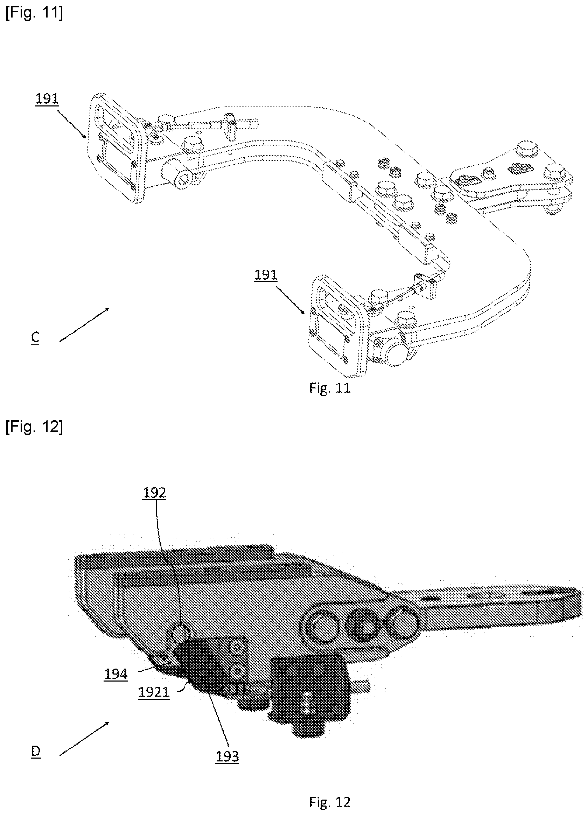

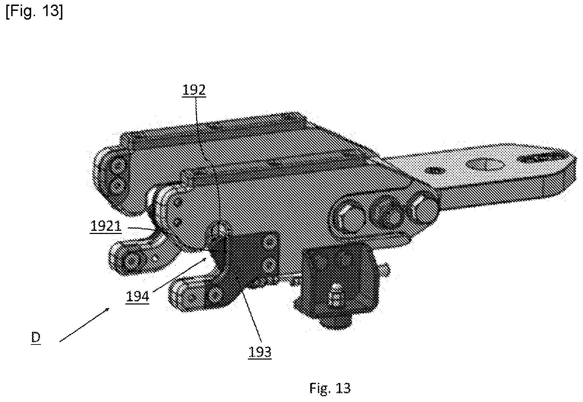

Comme illustré sur l'ensemble des figures 1 à 13, l'invention concerne une barre de remorquage 100.

Le terme « barre de remorquage » se réfère à un dispositif utilisé pour remorquer ou pousser un aéronef. Il s'agit généralement d'une barre robuste qui peut être attachée à l'aéronef d'une part, et à un véhicule remorqueur d'autre part, permettant ainsi le déplacement de l'aéronef sur le sol.

Le terme « aéronef » désigne tout véhicule capable de se déplacer dans l'atmosphère terrestre. Il peut s'agir d'avions, d'hélicoptères, de dirigeables ou de tout autre type de véhicule conçu pour naviguer dans l'air.

Dans l'invention, la barre de remorquage 100 est spécifiquement conçue pour se connecter à un train d'atterrissage avant ou pour s'engager avec une jambe de roue avant d'un aéronef au sol.

En d'autres termes, la barre de remorquage 100 dans l'invention est spécialement conçue pour s'accoupler avec certaines parties spécifiques d'un aéronef qui est au sol.

Le terme « train d'atterrissage avant » fait référence au système de roues situé à l'avant d'un aéronef. Il s'agit d'un composant essentiel de l'aéronef, utilisé pour le déplacement au sol, l'atterrissage et le décollage. Il peut comprendre une ou plusieurs roues, selon le type et la taille de l'aéronef.

Le terme «jambe de roue avant » désigne la structure spécifique qui relie la roue avant du train d'atterrissage au reste de l'aéronef. Il s'agit d'un élément clé du train d'atterrissage, qui permet la mobilité de la roue et absorbe une partie des forces générées lors de l'atterrissage.

### Structure de la barre de remorquage

Dans l'invention, la barre de remorquage 100 comprend un corps principal, un premier axe de pivotement 110, un train de roulage 120 et un dispositif mécanique d'indexation de la position du train de roulage 120.

### Structure de la barre de remorquage : un corps principal

Dans l'invention, le corps principal s'étend longitudinalement entre une première extrémité d'accroche à l'aéronef, dite extrémité arrière, et une seconde extrémité d'accroche à un véhicule remorqueur, dite extrémité avant, qui est opposée à l'extrémité arrière.

Dit autrement, le corps principal de la barre de remorquage 100 possède une structure allongée qui se déploie dans une direction longitudinale, L. Cette structure est conçue avec deux points d'accroche distincts, chacun se trouvant à une extrémité de la barre de remorquage 100.

Par ailleurs, le corps principal présente un poids désiré de nature à assurer une stabilité optimale lors des opérations de remorquage et de poussée de l'aéronef, tout en facilitant la maniabilité de la barre de remorquage 100.

En d'autres termes, dans la conception de cette barre de remorquage 100 pour aéronef, le poids du corps principal est déterminé de manière à optimiser la stabilité pendant les opérations de remorquage et de poussée de l'aéronef. Ce poids particulier contribue à la fois à maintenir la barre de remorquage 100 stable lorsqu'elle est utilisée pour déplacer l'aéronef et à garantir que la barre de remorquage 100 peut être manœuvrée avec facilité. Par exemple, une barre de remorquage 100 trop légère pourrait être instable lors du remorquage d'un aéronef lourd, tandis qu'une barre de remorquage 100 trop lourde pourrait être difficile à manœuvrer. Par conséquent, le poids du corps principal est choisi pour équilibrer ces deux aspects.

### Structure de la barre de remorquage : un premier axe de pivotement 110

Dans l'invention, le premier axe de pivotement 110, qui est solidaire du corps principal, s'étend transversalement à travers le corps principal.

Le terme « axe de pivotement » fait référence à un point ou une ligne autour de laquelle un objet peut tourner ou pivoter. En particulier, l'axe de pivotement est un élément fixe, intégré au corps principal de la barre, qui s'étend à travers ce corps principal dans une direction perpendiculaire à sa longueur. Ce positionnement permet à certaines parties de la barre de remorquage 100 de pivoter ou de tourner autour de cet axe.

Le terme « solidaire » signifie généralement que deux composants ou parties sont conçus pour bouger ensemble ou sont connectés de telle sorte que le mouvement ou la position de l'un affecte directement l'autre. En d'autres termes, si un composant est dit « solidaire » d'un autre, cela signifie qu'ils sont liés et agissent comme une seule unité dans le système mécanique.

Le terme « à travers » sert généralement à indiquer qu'un objet ou un élément passe d'un côté à l'autre d'un autre objet ou élément. En d'autres termes, si un composant est dit s'étendre « à travers » un autre composant, cela signifie qu'il traverse ce dernier, le pénètre d'un côté et en ressort de l'autre.

### Structure de la barre de remorquage : un train de roulage

Dans l'invention, le train de roulage 120 comprend une paire de bras 121 qui sont réglables angulairement par rapport au corps principal et qui sont reliés l'un à l'autre en parallèle, de manière solidaire.

Le terme « réglables angulairement » fait référence à la capacité d'ajuster ou de modifier l'angle ou l'orientation de quelque chose. En pratique, les bras 121 du train de roulage 120 sont réglables angulairement par rapport au corps principal de la barre de remorquage 100. Cela signifie que l'angle entre ces bras 121 et le corps principal peut être modifié ou ajusté selon les besoins, permettant ainsi un ajustement précis de la position et de l'orientation du train de roulage 120.

Le terme « train de roulage » désigne généralement l'ensemble des roues d'un de la barre de remorquage 100 qui lui permet de se déplacer au sol.

En pratique, chaque bras 121 présente une partie proximale et une partie distale.

En outre, chaque partie distale porte au moins un premier élément de contact 122 avec le sol.

Le premier élément de contact 122 au sol est conçu pour déplacer le corps principal sur le sol lorsqu'il est en contact avec le sol.

Dans un exemple, le premier élément de contact 122 au sol est une roue, un patin.

Par ailleurs, chaque partie proximale est couplée au premier axe de pivotement 110 de manière à pouvoir tourner librement autour de celui-ci.

Cela permet au train de roulage 120 d'occuper une succession de positions indexées.

Le terme « une succession de positions indexées » fait référence à une série de positions spécifiques et identifiables que peut occuper le train de roulage 120. Ces positions sont généralement répétables et peuvent être référencées ou « indexées » pour permettre une identification précise. Dans ce contexte particulier, cela signifie que le train de roulage 120 peut occuper une variété de positions définies.

En pratique, les positions indexées sont comprises entre une première position extrême, dite position repliée, et une deuxième position extrême, dite position déployée.

Dans la position repliée, les éléments de contact avec le sol sont situés à une distance minimale du corps principal.

Le terme « distance minimale » fait référence à la plus petite distance possible entre les éléments de contact avec le sol et le corps principal, lorsque le train de roulage 120 est en position repliée.

Dans la position déployée, les éléments de contact avec le sol sont situés à une distance maximale du corps principal.

Le terme « distance maximale » fait référence à la plus grande distance possible entre les éléments de contact avec le sol et le corps principal, lorsque le train de roulage 120 est en position déployée.

En pratique, dans la position déployée, le train de roulage 120 est agencé le long du corps principal de sorte que le corps principal adopte une configuration en dévers ou en plongée vers l'avant de l'aéronef, l'extrémité avant étant écartée du sol et l'extrémité arrière étant proche du sol.

En d'autres termes, dans la position déployée du train de roulage 120, la barre de remorquage 100 est arrangée de telle manière que son corps principal est incliné vers l'avant de l'aéronef. C'est-à-dire que l'extrémité avant de la barre de remorquage 100 est élevée par rapport au sol, tandis que l'extrémité arrière est plus proche du sol. Par exemple, lorsqu'une barre de remorquage 100 est utilisée pour remorquer un aéronef, le train de roulage 120 pourrait être déployé de telle sorte que la barre de remorquage 100 adopte cette configuration en dévers. Cela pourrait faciliter le remorquage de l'aéronef en positionnant l'extrémité avant de la barre de remorquage 100 à une hauteur appropriée pour se connecter à l'aéronef, tout en gardant l'extrémité arrière proche du sol pour la stabilité.

Dans une mise en œuvre particulière du train de roulage 120, celui-ci est conçu pour occuper au moins une troisième position, dite position partiellement escamotée.

Dans la position partiellement escamotée, les éléments de contact avec le sol sont situés à une distance du corps principal comprise entre la distance minimale et la distance maximale.

Cela permet à la barre de remorquage 100 de s'adapter à diverses conditions de sol et de remorquage.

En outre, dans le cas où l'aéronef est fortement chargé, ce qui pourrait potentiellement abaisser l'avant de l'aéronef, la barre de remorquage 100 pourrait adopter cette position partiellement escamotée.

Cela permettrait à la barre de remorquage 100 de passer sous l'aéronef et de s'y accrocher correctement, offrant une flexibilité et une adaptabilité essentielles dans les opérations de remorquage.

### Structure de la barre de remorquage : un dispositif mécanique d'indexation de la position du train de roulage

Dans l'invention, le dispositif mécanique d'indexation de la position du train de roulage 120 comprend un premier mécanisme mécanique de commande 130, un premier mécanisme mécanique de maintien 140 et un premier mécanisme mécanique de transmission de commande 150.

### - Structure du dispositif mécanique d'indexation de la position du train de roulage : un premier mécanisme mécanique de commande

Dans l'invention, le premier mécanisme mécanique de commande 130 est conçu pour produire une force exclusivement mécanique.

Le terme « une force exclusivement mécanique » fait référence à une force qui est produite et transmise uniquement par des moyens mécaniques. Il s'agit d'une force qui ne dépend pas de l'intervention d'autres formes d'énergie, telles que l'électricité, le magnétisme, ou la chaleur. Cela peut impliquer le mouvement direct d'objets physique, la pression, la traction, ou d'autres formes d'interactions mécaniques.

En pratique, le premier mécanisme mécanique de commande 130 est conçu pour être déplaçable entre une première position et une deuxième position, par transmission directe d'au moins un mouvement manuel de translation ou un mouvement manuel de rotation.

Le terme « transmission directe » désigne le processus par lequel un mouvement ou une force est transmis sans l'intervention de mécanismes intermédiaires ou indirects. En d'autres termes, si un mouvement ou une force est transmis par « transmission directe », cela signifie qu'il est transmis de manière immédiate et sans déviation ou transformation par d'autres mécanismes.

Dans un exemple, le premier mécanisme mécanique de commande 130 est un levier ou un bouton-poussoir.

Dans une mise en oeuvre particulière de l'invention, la barre de remorquage 100 comprend en outre, au moins une poignée fixe 160 qui est disposée sur le corps principal au voisinage immédiat du premier mécanisme mécanique de commande 130.

Le terme « voisinage immédiat » fait référence à une zone très proche ou adjacente à un point de référence spécifique. Dans ce cas, il s'agit d'une zone qui est très proche ou directement adjacente au premier mécanisme mécanique de commande 130 sur lequel la poignée fixe 160 est disposée.

En pratique, la poignée fixe 160 est conçue pour être saisie par au moins une partie de la main d'un opérateur, de manière à permettre à l'opérateur d'exercer, avec au moins un doigt, une force d'appui lors de l'actionnement du premier mécanisme mécanique de commande 130.

Le terme « une force d'appui » fait référence à la force qui est exercée par l'opérateur sur la poignée fixe 160 dans le but d'actionner le premier mécanisme mécanique de commande 130. En pratique, cette force d'appui peut aider à déclencher, à contrôler ou à ajuster le fonctionnement du premier mécanisme mécanique de commande 130.

Par exemple, si le premier mécanisme de commande est un levier, l'opérateur pourrait saisir la poignée fixe 160 et pousser ou tirer le levier avec un ou plusieurs doigts.

Dans un autre exemple, si le premier mécanisme de commande est un bouton-poussoir, l'opérateur pourrait saisir la poignée fixe 160 et appuyer sur le bouton avec un ou plusieurs doigts.

Ainsi, la présence de la poignée fixe 160 à proximité immédiate du premier mécanisme de commande facilite l'actionnement de ce dernier par l'opérateur.

### - Structure du dispositif mécanique d'indexation de la position du train de roulage : un premier mécanisme mécanique de maintien

Dans l'invention, le premier mécanisme mécanique de maintien 140 comprend un premier dispositif de rappel élastique qui est conçu pour ramener le premier mécanisme mécanique de maintien 140 dans les différentes positions indexées.

Le terme « dispositif de rappel élastique » fait référence à un composant mécanique qui utilise une force élastique, par exemple fournie par un ressort, pour ramener un autre mécanisme à sa position originale ou à une série de positions prédéfinies, également connues sous le nom de positions indexées.

Par exemple, si le premier mécanisme de maintien est un levier qui peut être déplacé dans différentes positions pour effectuer diverses fonctions, le dispositif de rappel élastique serait capable de ramener le levier à ces positions prédéfinies après qu'il a été déplacé.

Ainsi, le dispositif de rappel élastique assure un retour précis et fiable du premier mécanisme de maintien à ses positions indexées.

En pratique, le premier mécanisme mécanique de maintien 140 est conçu pour, lorsqu'il est soumis à l'effet du poids du corps principal, bloquer les différentes positions indexées de sorte que les bras 121 ne peuvent pas tourner librement autour du premier axe de pivotement 110.

En pratique, cela signifie que le premier mécanisme mécanique de maintien 140 sur une barre de remorquage 100 pour aéronef est conçu pour stabiliser la position des bras 121 de la barre de remorquage 100.

Lorsqu'il est soumis à l'effet du poids du corps principal, le premier mécanisme mécanique de maintien 140 bloque les bras 121 en différentes positions indexées, empêchant ainsi leur rotation libre autour du premier axe de pivotement 110.

Par exemple, si les bras 121 de la barre de remorquage 100 sont positionnés pour remorquer un avion, le poids du corps principal de la barre de remorquage 100 pourrait tenter de les faire tourner.

Cependant, grâce au premier mécanisme mécanique de maintien 140, les bras 121 resteront dans leur position indexée et ne tourneront pas librement, assurant ainsi un contrôle stable et sûr de l'aéronef pendant le remorquage.

Dans une mise en œuvre particulière, le premier mécanisme mécanique de maintien 140 comprend un doigt d'indexation et un crantage 141 qui est conçu pour coopérer avec le doigt d'indexation.

Le terme « doigt d'indexation » fait référence à un élément qui est conçu pour s'insérer dans un autre élément, tel qu'un crantage 141, afin de maintenir une position spécifique.

Le terme « crantage » fait référence à un ensemble d'encoches ou de dépressions qui sont conçues pour recevoir le doigt d'indexation.

Le terme « coopérer » fait référence à l'interaction fonctionnelle entre deux éléments, dans ce cas, un doigt d'indexation et un crantage 141. Ces deux éléments sont conçus pour travailler ensemble, ou « coopérer », afin de réaliser une certaine fonction. En particulier, le doigt d'indexation et le crantage 141 sont conçus de manière à ce qu'ils s'engagent l'un avec l'autre pour assurer le positionnement précis du premier mécanisme mécanique de maintien 140.

Dans cette mise en œuvre particulière, les positions indexées se succèdent de manière discrète.

Le terme « de manière discrète » fait référence à un changement ou une progression qui se fait par étapes ou par intervalles distincts plutôt que de manière continue. Dans cette mise en oeuvre particulière, cela signifie que les positions indexées se succèdent par étapes distinctes.

Dans un exemple de cette mise en oeuvre particulière, le crantage 141 est ménagé à la surface de la périphérie d'au moins l'un des bras 121.

Le terme « à la surface de la périphérie » fait référence non seulement à la zone externe ou au bord d'un objet spécifique, mais également à une certaine profondeur en dessous de la surface. Dans cet exemple de mise en oeuvre particulière, cela signifie que le crantage 141 est usiné ou obtenu dans la masse même du matériau, sur une certaine profondeur depuis la surface externe ou le bord d'au moins l'un des bras 121 du train roulant. Techniquement, un crantage 141 « à la surface » décrit donc un crantage 141 faisant corps avec le matériau sur une certaine profondeur depuis la surface.

En d'autres termes, le crantage 141 est intégré dans la structure de la périphérie d'au moins l'un des bras 121. Lorsqu'il est dit que le crantage 141 est « à la surface de la périphérie », cela signifie que le crantage 141 n'est pas simplement attaché à la surface externe ou au bord du bras 121, mais qu'il est usiné ou obtenu dans le matériau du bras 121 lui-même, sur une certaine profondeur depuis la surface externe.

Par exemple, si l'un des bras 121 de la barre de remorquage 100 est en acier, le crantage 141 serait usiné directement dans l'acier sur une certaine profondeur depuis la surface du bras 121.

Ainsi, le crantage 141 est en fait une partie intégrante de la structure du bras 121, ce qui contribue à sa solidité et à sa durabilité.

### - Structure du dispositif mécanique d'indexation de la position du train de roulage : un premier mécanisme mécanique de transmission de commande

Dans l'invention, le premier mécanisme mécanique de transmission de commande 150 est conçu pour relier cinématiquement le premier mécanisme mécanique de commande 130 et le premier mécanisme mécanique de maintien 140.

Le terme « cinématiquement » fait référence à la manière dont le mouvement est transmis ou relié entre deux ou plusieurs composants. Dans ce contexte particulier, cela signifie que le premier mécanisme mécanique de transmission de commande 150 est conçu pour relier le mouvement entre le premier mécanisme mécanique de commande 130 et le premier mécanisme mécanique de maintien 140.

Autrement dit, lorsque le premier mécanisme de commande est activé, cela provoque un mouvement correspondant dans le premier mécanisme de maintien.

Par exemple, si le premier mécanisme de commande est une manette qui est poussée vers l'avant, le premier mécanisme de transmission de commande transmet ce mouvement au premier mécanisme de maintien, le faisant se déplacer de la même manière.

Dans un exemple de réalisation du premier mécanisme de transmission de commande, celui-ci est choisi parmi une série de câbles, des tiges, des biellettes, un train d'engrenages ou tout autre mécanisme capable de transmettre un mouvement entre le premier mécanisme de commande et le premier mécanisme de maintien.

### Fonctionnement du dispositif mécanique d'indexation de la position du train de roulage

Dans l'invention, le dispositif mécanique d'indexation est conçu pour répondre au soulèvement manuel de l'extrémité avant du corps principal, par rapport au sol.

Le terme « soulèvement manuel » fait référence à l'action d'élever ou de lever un objet à l'aide de la force humaine, sans l'utilisation de machines ou d'autres aides.

Ce soulèvement permet de décharger au moins partiellement le premier mécanisme mécanique de maintien 140 de l'effet du poids du corps principal.

Dit autrement, ce soulèvement manuel permet de diminuer la pression exercée par le poids du corps principal sur le premier mécanisme mécanique de maintien 140.

Subséquemment, l'actionnement du premier mécanisme mécanique de commande 130 permet de transmettre la force exclusivement mécanique pour libérer le premier mécanisme mécanique de maintien 140.

De cette manière, le premier mécanisme mécanique de maintien 140 peut être débloqué, ce qui permet aux bras 121 de tourner librement autour du premier axe de pivotement 110.

### Premier mode de réalisation de l'invention : un timon amortisseur

Dans un premier mode de réalisation de l'invention, une partie du corps principal, dite partie avant, comprend l'extrémité avant.

La partie avant présente une section transversale qui est sensiblement carrée ou rectangulaire.

Le terme « section transversale » fait référence à une vue ou une coupe d'un objet le long d'un plan perpendiculaire à son axe principal.

De plus, tout ou partie de la partie avant est creux et définit un volume intérieur. Le volume intérieur est conçu pour qu'un ensemble timon amortisseur 170 vienne s'y loger, au moins partiellement.

L'ensemble timon amortisseur 170 comprend un timon 171, une butée fixe 172 et un dispositif amortisseur 173.

Le dispositif amortisseur 173 est solidaire du timon 171 de manière coaxiale.

Le terme « de manière coaxiale » fait référence à un arrangement où deux ou plusieurs objets partagent un même axe. Dans ce contexte particulier, cela signifie que le dispositif amortisseur 173 est aligné avec le timon 171 de telle sorte qu'ils partagent le même axe.

Le dispositif amortisseur 173 est interposé entre le timon 171 et la butée fixe 172.

Le terme « interposé » fait référence à un objet ou un élément qui est placé ou positionné entre deux autres objets ou éléments. Dans ce contexte particulier, cela signifie que le dispositif amortisseur 173 est placé ou positionné entre le timon 171 et la butée fixe 172.

Le dispositif amortisseur 173 a pour fonction d'autoriser un débattement horizontal, ce qui permet d'amortir des sollicitations dynamiques.

Le terme « débattement horizontal » fait référence à un mouvement ou une oscillation dans une direction latérale ou parallèle à l'horizon. Dans ce contexte particulier, cela signifie que le dispositif amortisseur 173 autorise un mouvement latéral pour absorber les chocs ou les forces appliquées.

Le terme « sollicitations dynamiques » fait référence aux forces et mouvements variables qui agissent sur un objet ou un système. Cela inclut les vibrations, qui sont des oscillations rapides d'un objet autour d'une position d'équilibre, les pics de charge, qui sont des augmentations soudaines de force, et les à-coups, qui sont des mouvements brusques et rapides. Dans ce contexte particulier, cela signifie que le dispositif amortisseur 173 est conçu pour absorber ces sollicitations dynamiques.

Dans une mise en œuvre particulière du premier mode de réalisation de l'invention, le dispositif amortisseur 173 comprend des éléments amortisseurs élastiques 1731, mécaniques, hydrauliques et/ou pneumatiques.

Dans une autre mise en œuvre particulière du premier mode de réalisation de l'invention, le dispositif amortisseur 173 présente une section transversale sensiblement circulaire.

Cette forme contribue à une distribution plus uniforme des forces, ce qui peut être bénéfique pour la fonction d'amortissement du dispositif amortisseur 173.

### Deuxième mode de réalisation de l'invention : une partie intermédiaire incurvée

Dans un deuxième mode de réalisation de l'invention, le corps principal présente une partie avant, une partie arrière et une partie intermédiaire I.

La partie avant inclut l'extrémité avant, la partie arrière inclut l'extrémité arrière, tandis que la partie intermédiaire inclut le train de roulage 120 et relie la partie avant à la partie arrière.

La partie intermédiaire comprend au moins une première partie de section incurvée A qui présente une convexité qui est orientée vers le sol.

Le terme « section incurvée a une convexité qui est orientée vers le sol » fait référence à une partie de l'objet qui est courbée de manière spécifique. Cette courbure est telle que le point le plus saillant ou le plus élevé de la courbe, également connu sous le nom de convexité, est orienté ou tourné vers le sol.

Dans une mise en oeuvre particulière, la partie intermédiaire est exclusivement composée d'une première partie de section incurvée A.

Ainsi, dans cette mise en oeuvre particulière, la partie de la barre de remorquage 100 pour aéronef qui inclut le train de roulage 120 et qui relie la partie avant à la partie arrière, est entièrement formée d'une section qui possède une courbure spécifique.

Ce design permet d'éviter tout contact avec certaines parties de l'aéronef qui sont sensibles à la casse (p. ex. une caméra).

Enfin, la partie avant et la partie arrière sont en position surélevée par rapport à la partie intermédiaire.

Cela signifie que lorsque la barre de remorquage 100 est posée sur le sol, les extrémités avant et arrière sont plus élevées que la partie intermédiaire qui contient le train de roulage 120.

### Troisième mode de réalisation de l'invention : une partie arrière incurvée

Dans un troisième mode de réalisation de l'invention, le corps principal présente une partie avant et une partie arrière.

La partie avant inclut l'extrémité avant, tandis que la partie arrière inclut l'extrémité arrière et le train de roulage 120.

En outre, la partie avant comprend au moins une deuxième partie de section incurvée B qui présente une convexité qui est orientée vers le sol.

Dans une mise en oeuvre particulière du troisième mode de réalisation de l'invention, la deuxième partie de section incurvée B comprend au moins un deuxième élément de contact avec le sol 180 qui est conçu pour déplacer la deuxième partie de section incurvée B sur le sol, lorsqu'il est en contact avec le sol.

Dans un exemple, le deuxième élément de contact avec le sol 180 est une roue, un patin.

Dans une autre mise en oeuvre particulière du troisième mode de réalisation de l'invention, la partie avant comprend une première poignée de manutention manuelle 190 qui est disposée au voisinage immédiat de la partie arrière, la première poignée de manutention manuelle 190 étant conçue pour manipuler la deuxième partie de section incurvée B.

Le terme « poignée de manutention manuelle » fait référence à un dispositif conçu pour faciliter la manipulation ou le déplacement de la deuxième partie de section incurvée B par une personne. Cette poignée de manutention manuelle peut être saisie à la main pour manipuler, déplacer ou contrôler la deuxième partie de section incurvée B.

Ainsi, lors du remorquage d'un aéronef, un opérateur pourrait saisir la première poignée de manutention manuelle 190 pour diriger la barre de remorquage 100 pour l'accrocher à l'aéronef.

### Quatrième mode de réalisation de l'invention : une tête d'accrochage au train d'atterrissage avant

Le quatrième mode de réalisation de l'invention concerne la configuration où la barre de remorquage 100 est spécifiquement conçue pour se connecter à un train d'atterrissage avant d'un aéronef au sol.

Dans le quatrième mode de réalisation de l'invention, l'extrémité arrière du corps principal comprend une première tête d'accrochage C.

Le terme « tête d'accrochage » fait référence à une partie de la barre de remorquage 100 qui est conçue pour se connecter au train d'atterrissage de l'aéronef.

En pratique, la première tête d'accrochage C présente une section en coupe transversale qui est globalement en forme de U ou de C et comporte deux bras 121 longitudinaux et un bras 121 transversal, l'extrémité libre de chaque bras 121 longitudinal comprenant au moins une deuxième poignée de manutention manuelle 191.

En particulier, les deuxièmes poignées de manutention manuelle 191 sont disposées de manière à permettre un pré-positionnement de la première tête d'accrochage C par rapport à un point de connexion sur le train d'atterrissage avant.

Le terme « pré-positionnement » fait référence à l'action de placer ou de positionner quelque chose avant une action ou une opération ultérieure, en l'occurrence, le rattachement à l'aéronef. Ce terme peut aussi être interprété comme « pré-centrage ».

Le « pré-centrage » signifie ici que les deuxièmes poignées de manutention manuelle 191 permettent un centrage approximatif, une mise en position grossière, de la barre de remorquage 100 par rapport à l'aéronef, avant l'accrochage final.

Ainsi, lorsque l'opérateur manipule et oriente la barre de remorquage 100 à l'aide des deuxièmes poignées de manutention manuelle 191, celles-ci lui permettent de pré-positionner et pré-aligner facilement l'extrémité de la barre de remorquage 100 par rapport au point d'accrochage sur l'aéronef, avant la connexion finale.

Les deuxièmes poignées de manutention manuelle 191 jouent donc un rôle de pré-centrage, c'est-à-dire de positionnement initial approximatif pour faciliter l'accrochage de la barre de remorquage 100 à l'aéronef.

### Cinquième mode de réalisation de l'invention : une tête d'accrochage à la jambe de roue avant

Le cinquième mode de réalisation de l'invention concerne une configuration où la barre de remorquage 100 est spécifiquement conçue pour s'engager avec une jambe de roue avant d'un aéronef au sol.

Dans le cinquième mode de réalisation de l'invention, l'extrémité arrière du corps principal comprend une deuxième tête d'accrochage D.

La deuxième tête d'accrochage D comprend un logement 192, un deuxième axe de pivotement 193 et un deuxième mécanisme mécanique de maintien 194.

En pratique, le logement 192 s'étend transversalement à travers la deuxième tête d'accrochage D et, c'est dans ce logement 192 que vient s'engager au moins une partie de la jambe de roue avant, par une bobine d'accrochage de la jambe de roue avant.

En outre, le deuxième axe de pivotement 193 est solidaire de la deuxième tête d'accrochage D et s'étend transversalement à travers cette dernière.

Enfin, le deuxième mécanisme mécanique de maintien 194 est conçu pour basculer en rotation autour du deuxième axe de pivotement 193 entre une position ouverte et une position fermée.

Dans la position ouverte, la partie de la jambe de roue avant peut pénétrer dans le logement 192, et le deuxième mécanisme de maintien est logé sensiblement entièrement dans une paroi latérale 1921 du logement 192.

Dans la position fermée, le deuxième mécanisme mécanique de maintien 194 bloque la sortie du logement 192, verrouillant ainsi la partie de la jambe de roue avant à l'intérieur du logement 192, et le deuxième mécanisme mécanique de maintien 194 est positionné sensiblement entièrement en saillie par rapport à la paroi latérale 1921 du logement 192.

Dans une mise en œuvre particulière, le deuxième mécanisme mécanique de maintien 194 comprend un deuxième dispositif de rappel élastique qui est conçu pour ramener le deuxième mécanisme mécanique de maintien 194 dans la position fermée.

Dans un exemple, le deuxième mécanisme mécanique de maintien 194 est un loquet de verrouillage.

Dans une autre mise en œuvre particulière, la barre de remorquage 100 comprend un deuxième mécanisme mécanique de commande et un deuxième mécanisme mécanique de transmission de commande.

En pratique, le deuxième mécanisme mécanique de commande est conçu pour produire une force exclusivement mécanique et pour être déplaçable entre une première position et une deuxième position, par transmission directe d'au moins un mouvement manuel de translation ou un mouvement manuel de rotation.

Dans un exemple, le deuxième mécanisme mécanique de commande est un levier ou un bouton-poussoir.

Dans un autre exemple, le deuxième mécanisme mécanique de transmission de commande est choisi parmi une série de câbles, des tiges, des biellettes, un train d'engrenages ou tout autre mécanisme capable de transmettre un mouvement entre le deuxième mécanisme de commande et le deuxième mécanisme de maintien.

Par ailleurs, le deuxième mécanisme mécanique de transmission de commande est conçu pour relier cinématiquement le deuxième mécanisme mécanique de commande et le deuxième mécanisme mécanique de maintien 194.

D'autres aspects de liés à l'invention sont décrits ci-dessous.

Dans un premier mode de réalisation particulier, le corps principal de la barre de remorquage est conçu de manière à être démontable et remontable dans la direction longitudinale.

En pratique, le corps principal de la barre de remorquage est subdivisé en au moins deux portions longitudinales qui sont conçues de manière à être couplées de façon démontable/remontable (p. ex. à l'aide de boulons et d'écrous) au niveau d'une de leur extrémité respective.

Les portions longitudinales sont conçues pour s'emboiter l'une avec l'autre.

De cette manière, on peut aisément ranger la barre de remorquage, repliée, dans la soute d'un aéronef.

Dans un deuxième mode de réalisation particulier, le corps principal de la barre de remorquage est conçu de manière à être repliable et remontable dans la direction longitudinale.

En pratique, le corps principal de la barre de remorquage comprend au moins deux portions longitudinales, dont l'une est repliable et reliée de manière pivotante à l'autre portion longitudinale. Le corps principal comprend en outre une partie de liaison à charnière qui est formée entre la portion longitudinale pliable et l'autre portion longitudinale.

En outre, la portion longitudinale repliable est conçue, lorsqu'elle est dans sa position repliée, pour s'emboiter avec l'autre portion longitudinale.

De cette manière, on peut aisément ranger la barre de remorquage, repliée, dans la soute d'un aéronef.

Dans un troisième mode de réalisation particulier, l'élément amortisseur comprend une pluralité d'entretoises 1731 qui sont formées en matière à comportement plastique (p. ex. du caoutchouc ou matériau similaire) qui sont axialement séparées les unes des autres par au moins un élément de retenue 1732 (p. ex. une rondelle de butée).

En outre, les éléments de retenue 1732 qui se trouvent aux extrémités de l'élément amortisseur sont plus épais que les éléments de retenue intermédiaires 1732, et présente un diamètre qui est supérieur au côté le plus long de barre de timon 171 de section carrée ou rectangulaire.

En pratique, lorsque l'on installe la barre de timon 171 dans le volume intérieur du corps principal de la barre de remorquage, la barre de timon 171 est maintenue en place par une première butée fixe, dite butée avant, et une deuxième butée fixe, dite butée arrière, qui sont disposées le long du corps principal. Dans ce cas, on considère que l'avant se trouve du côté de la première extrémité de la barre de timon et l'arrière se trouve du côté de la deuxième extrémité de la barre de timon.

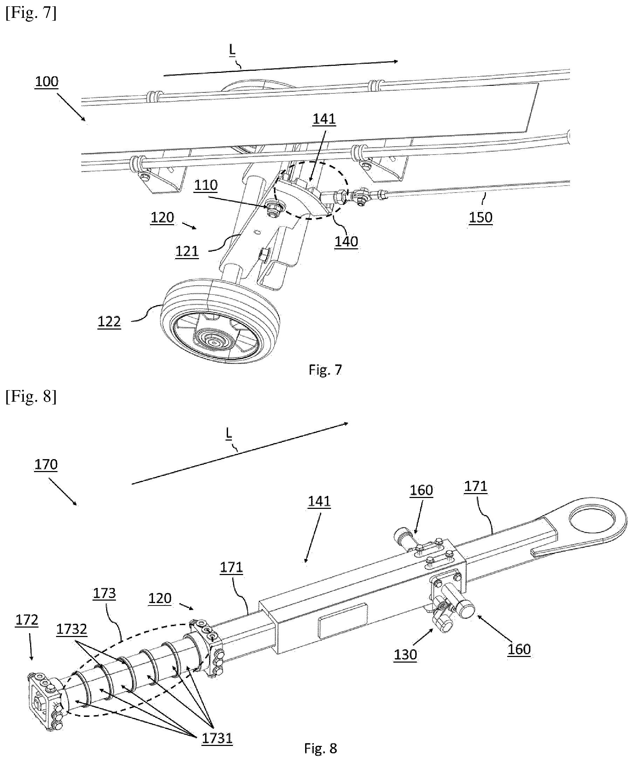

La barre du timon 171 est guidée en sa partie centrale par un élément de guidage (de section rectangulaire sur ma figure 8). Cet élément de guidage vient se loger entre le tube principal et la barre du timon et permet ainsi au timon de coulisser précisément dans le tube principal.

La butée avant est disposée avant l'une des rondelles d'extrémité de l'élément amortisseur, dite rondelle avant. La deuxième butée est disposée après l'autre rondelle d'extrémité de l'élément amortisseur, dite rondelle arrière.

De cette manière, l'élément amortisseur est bloqué en butée entre la butée avant et la butée arrière.

Lors de l'utilisation de barre de remorquage, lorsque l'on tire la barre de remorquage (c.-à-d., via la tête de timon), la rondelle arrière va se décoller de la butée arrière et venir compresser la pluralité d'entretoises qui amortit ou élimine ainsi les oscillations produites dans la direction longitudinale de la barre de remorquage.

Toujours, lors de l'utilisation de barre de remorquage, lorsque l'on pousse la barre de remorquage (c.-à-d., via la tête de timon), la rondelle avant va se décoller de la butée avant et venir compresser la pluralité d'entretoises qui amortit ou élimine ainsi les oscillations produites dans la direction longitudinale de la barre de remorquage.

Dans une mise en œuvre particulière de ce mode de réalisation particulier, le corps principal et la barre de timon présentent chacun un trou traversant de brochage de manière perpendiculaire à l'axe du corps principal et qui coïncident lorsque l'on installe la barre de timon dans le volume intérieur du corps principal de la barre de remorquage.

Puis, dans cette mise en œuvre particulière de ce mode de réalisation particulier, la barre de remorquage comprend un organe de retenue (p. ex. de forme cylindrique) telle qu'une goupille ou une broche à bille. L'organe de retenue est conçu pour se loger dans les trous traversants de brochage qui coïncident.

En pratique, l'organe de retenue est conçu pour maintenir le corps principal et la barre de timon ensemble quand l'organe de retenue est engagé dans les trous traversants de brochage qui coïncident, inhibant ainsi l'élément amortisseur.

Par ailleurs, l'organe de retenue est conçu pour permettre au corps principal et à la barre de timon de se séparer quand on désengage l'organe de retenue des trous traversants de brochage qui coïncident, libérant ainsi l'élément amortisseur.

## Revendications

1. Barre de remorquage (100) spécifiquement conçue pour se connecter à un train d'atterrissage avant ou pour s'engager avec une jambe de roue avant d'un aéronef au sol, de manière à remorquer ou pousser l'aéronef, la barre de remorquage (100) comprenant:
- un corps principal qui s'étend longitudinalement entre une première extrémité d'accroche à l'aéronef, dite extrémité arrière, et une seconde extrémité d'accroche à un véhicule remorqueur, dite extrémité avant, l'extrémité avant étant opposée à l'extrémité arrière, le corps principal présentant un poids désiré,
- un premier axe de pivotement (110) solidaire du corps principal qui s'étend transversalement à travers le corps principal,
- un train de roulage (120) qui comprend une paire de bras (121) réglables angulairement par rapport au corps principal et qui sont reliés l'un à l'autre en parallèle, de manière solidaire, chaque bras (121) présentant une partie proximale et une partie distale,
- chaque partie distale portant au moins un premier élément de contact (122) avec le sol qui est conçu pour déplacer le corps principal sur le sol, lorsqu'il est en contact avec le sol,
- chaque partie proximale étant couplée au premier axe de pivotement (110) de manière à pouvoir tourner librement autour de celui-ci, permettant au train de roulage (120) d'occuper une succession de positions indexées qui sont comprises entre,
- une première position extrême, dite position repliée, dans laquelle les éléments de contact avec le sol sont situés à une distance minimale du corps principal, et
- une deuxième position extrême, dite position déployée, dans laquelle les éléments de contact avec le sol sont situés à une distance maximale du corps principal,
**caractérisé par**,
- un dispositif mécanique d'indexation de la position du train de roulage (120) comprenant:
- un premier mécanisme mécanique de commande (130), produisant une force exclusivement mécanique, qui est conçu pour être déplaçable entre une première position et une deuxième position, par transmission directe d'au moins un mouvement manuel de translation ou un mouvement manuel de rotation,
- un premier mécanisme mécanique de maintien (140) qui comprend un premier dispositif de rappel élastique conçu pour ramener le premier mécanisme mécanique de maintien (140) dans les différentes positions indexées, le premier mécanisme mécanique de maintien (140) étant conçu pour, lorsqu'il est soumis à l'effet du poids du corps principal, bloquer les différentes positions indexées de sorte que les bras (121) ne peuvent pas tourner librement autour du premier axe de pivotement (110),
- un premier mécanisme mécanique de transmission de commande (150) qui est conçu pour relier cinématiquement le premier mécanisme mécanique de commande (130) et le premier mécanisme mécanique de maintien (140),
dans laquelle,
le dispositif mécanique d'indexation est conçu pour,
- en réponse au soulèvement manuel de l'extrémité avant du corps principal, par rapport au sol, pour décharger au moins partiellement le premier mécanisme mécanique de maintien (140) de l'effet du poids du corps principal, et subséquemment, l'actionnement du premier mécanisme mécanique de commande (130),
- transmettre la force exclusivement mécanique pour libérer le premier mécanisme mécanique de maintien (140), de manière à débloquer la position indexée de sorte que les bras (121) peuvent tourner librement autour du premier axe de pivotement (110).

2. Barre de remorquage (100) selon la revendication 1 dans laquelle, le premier mécanisme mécanique de maintien (140) comprend un doigt d'indexation et un crantage (141) conçu pour coopérer avec le doigt d'indexation, les positions indexées se succédant de manière discrète.

3. Barre de remorquage (100) selon la revendication 2 dans laquelle, le crantage (141) est ménagé à la surface de la périphérie d'au moins l'un des bras (121).

4. Barre de remorquage (100) selon l'une quelconque des revendications 1 à 3 dans laquelle, le train de roulage (120) est conçu pour occuper au moins une troisième position, dite position partiellement escamotée, dans laquelle les éléments de contact avec le sol sont situés à une distance du corps principal comprise entre la distance minimale et la distance maximale.

5. Barre de remorquage (100) selon l'une quelconque des revendications 1 à 4 comprenant en outre, au moins une poignée fixe (160) qui est disposée sur le corps principal au voisinage immédiat du premier mécanisme mécanique de commande (130), la poignée fixe (160) étant conçue pour être saisie par au moins une partie de la main d'un opérateur, de manière à permettre à l'opérateur d'exercer une force d'appui lors de l'actionnement du premier mécanisme mécanique de commande (130).

6. Barre de remorquage (100) selon l'une quelconque des revendications 1 à 5 dans laquelle, au moins une partie du corps principal, dite partie avant, qui inclut l'extrémité avant, présente une section transversale sensiblement carrée ou rectangulaire, tout ou partie de la partie avant étant creuse et définissant un volume intérieur qui est conçu pour qu'un ensemble timon amortisseur (170) vienne s'y loger au moins partiellement, l'ensemble timon amortisseur (170) comprenant,
- un timon (171),
- une butée fixe (172), et
- un dispositif amortisseur (173), solidaire du timon (171) de manière coaxiale, qui est interposé entre le timon (171) et la butée fixe (172) pour autoriser un débattement horizontal de manière à amortir des sollicitations dynamiques.

7. Barre de remorquage (100) selon la revendication 6 dans laquelle, le dispositif amortisseur (173) comprend des éléments amortisseurs élastiques (1731), mécaniques, hydrauliques et/ou pneumatiques.

8. Barre de remorquage (100) selon l'une quelconque des revendications 6 à 7 dans laquelle, le dispositif amortisseur (173) présente une section transversale sensiblement circulaire.

9. Barre de remorquage (100) selon l'une quelconque des revendications 1 à 8 dans laquelle, le corps principal présente,
- une partie avant qui inclut l'extrémité avant,
- une partie arrière qui inclut l'extrémité arrière, et
- une partie intermédiaire qui inclut le train de roulage (120) et qui relie entre elles la partie avant et la partie arrière, la partie intermédiaire présentant au moins une première partie de section incurvée, A, avec une convexité qui est orientée vers le sol dans laquelle, la partie avant et la partie arrière sont en position surélevée par rapport à la partie intermédiaire.

10. Barre de remorquage (100) l'une quelconque des revendications 1 à 8 dans laquelle, le corps principal présente,
- une partie avant qui inclut l'extrémité avant, et
- une partie arrière qui inclut l'extrémité arrière et le train de roulage (120), la partie avant présentant au moins une deuxième partie de section incurvée, B, avec une convexité qui est orientée vers le sol.

11. Barre de remorquage (100) selon la revendication 10 dans laquelle la deuxième partie de section incurvée, B, comprend au moins un deuxième élément de contact avec le sol (180) qui est conçu pour déplacer la deuxième partie de section incurvée, B, sur le sol, lorsqu'il est en contact avec le sol.

12. Barre de remorquage (100) selon l'une quelconque des revendications 10 à 11 dans laquelle, la partie avant comprend une première poignée de manutention manuelle (190) qui est disposée au voisinage immédiat de la partie arrière, la première poignée de manutention manuelle (190) étant conçue pour manipuler la deuxième partie de section incurvée, B.

13. Barre de remorquage (100) selon l'une quelconque des revendications 1 à 12 dans laquelle, lorsque la barre de remorquage (100) est spécifiquement conçue pour se connecter à un train d'atterrissage avant d'un aéronef au sol, l'extrémité arrière du corps principal comprend une première tête d'accrochage, C, qui présente une section en coupe transversale qui est globalement en forme de U ou de C avec deux bras (121) longitudinaux et un bras (121) transversal, l'extrémité libre de chaque bras (121) longitudinal comprenant au moins une deuxième poignée de manutention manuelle (191), les deuxièmes poignées de manutention manuelle (191) étant disposées de manière à permettre un pré-positionnement de la première tête d'accrochage, C, par rapport à un point de connexion sur le train d'atterrissage avant.

14. Barre de remorquage (100) selon l'une quelconque des revendications 1 à 12 dans laquelle, lorsque la barre de remorquage (100) est spécifiquement conçue pour s'engager avec une jambe de roue avant d'un aéronef au sol, l'extrémité arrière du corps principal comprend une deuxième tête d'accrochage, D, qui comprend,
- un logement (192) qui s'étend transversalement à travers la deuxième tête d'accrochage, D, et dans lequel vient s'engager au moins une partie de la jambe de roue avant,
- un deuxième axe de pivotement (193) solidaire de la deuxième tête d'accrochage, D, et qui s'étend transversalement à travers la deuxième tête d'accrochage, D, et
- un deuxième mécanisme mécanique de maintien (194) qui est conçu pour basculer en rotation autour du deuxième axe de pivotement (193) entre,
- une position ouverte permettant à la partie de la jambe de roue avant de pénétrer dans le logement (192), et dans laquelle le deuxième mécanisme mécanique de maintien (194) est logé sensiblement entièrement dans une paroi latérale (1921) du logement (192), et
- une position fermée dans laquelle le deuxième mécanisme mécanique de maintien (194) bloque la sortie du logement (192), verrouillant ainsi partie de la jambe de roue avant à l'intérieur du logement (192), et dans laquelle le deuxième mécanisme mécanique de maintien (194) est positionné sensiblement entièrement en saillie par rapport à la paroi latérale (1921) du logement (192).

## Patentansprüche

1. Abschleppstange (100), die eigens dazu ausgestaltet ist, sich mit einem vorderen Landefahrwerk zu verbinden oder mit einem vorderen Fahrwerksbein eines Luftfahrzeugs am Boden ineinanderzugreifen, derart dass das Luftfahrzeug abgeschleppt oder geschoben wird, wobei die Abschleppstange (100) umfasst:
- einen Hauptkörper, der sich längs zwischen einem ersten Ende zur Befestigung am Luftfahrzeug, dem sogenannten hinteren Ende, und einem zweiten Ende zur Befestigung an einem Abschleppfahrzeug, dem sogenannten vorderen Ende, erstreckt, wobei das vordere Ende dem hinteren Ende entgegengesetzt ist, wobei der Hauptkörper ein gewünschtes Gewicht aufweist,
- eine erste Schwenkachse (110), die fest mit dem Hauptkörper verbunden ist und die sich quer durch den Hauptkörper erstreckt,
- ein Rollfahrwerk (120), das ein Paar Arme (121) umfasst, die in Bezug auf den Hauptkörper winklig verstellbar sind und die parallel miteinander fest verbunden sind, wobei jeder Arm (121) einen proximalen Teil und einen distalen Teil aufweist,
- wobei jeder distale Teil mindestens ein erstes Bodenkontaktelement (122) umfasst, das dazu ausgestaltet ist, den Hauptkörper am Boden zu verlagern, wenn er mit dem Boden in Kontakt ist,
- wobei jeder proximale Teil derart an die erste Schwenkachse (110) gekoppelt ist, dass er frei darum herum drehbar ist, wodurch es dem Rollfahrwerk (120) erlaubt wird, eine Folge von indexierten Positionen einzunehmen, die enthalten sind zwischen:
- einer ersten Endposition, der sogenannten angeklappten Position, in der die Bodenkontaktelemente sich in einem Mindestabstand vom Hauptkörper befinden, und
- einer zweiten Endposition, der sogenannten ausgeklappten Position, in welcher die Bodenkontaktelemente sich in einem Höchstabstand vom Hauptkörper befinden,
**gekennzeichnet durch**
- eine mechanische Vorrichtung zur Indexierung der Position des Rollfahrwerks (120), umfassend:
- einen ersten mechanischen Steuermechanismus (130), der eine ausschließlich mechanische Kraft erzeugt und der dazu ausgestaltet ist, durch direkte Übertragung mindestens einer manuellen Translationsbewegung oder einer manuellen Drehbewegung zwischen einer ersten Position und einer zweiten Position verlagerbar zu sein,
- einen ersten mechanischen Haltemechanismus (140), der eine erste elastische Rückstellvorrichtung umfasst, die dazu ausgestaltet ist, den ersten mechanischen Haltemechanismus (140) in die verschiedenen indexierten Positionen zurückzubringen, wobei der erste mechanische Haltemechanismus (140) dazu ausgestaltet ist, wenn er der Wirkung des Gewichts des Hauptkörpers unterliegt, die verschiedenen indexierten Positionen derart zu sperren, dass die Arme (121) sich nicht frei um die erste Schwenkachse (110) drehen können,
- einen ersten mechanischen Steuerübertragungsmechanismus (150), der dazu ausgestaltet ist, den ersten mechanischen Steuermechanismus (130) und den ersten mechanischen Haltemechanismus (140) kinematisch zu verbinden,
wobei
die mechanische Indexierungsvorrichtung dazu ausgestaltet ist,
- als Reaktion auf das manuelle Anheben des vorderen Endes des Hauptkörpers in Bezug auf den Boden den ersten mechanischen Haltemechanismus (140) zumindest teilweise von der Wirkung des Gewichts des Hauptkörpers zu entlasten, und anschließend die Betätigung des ersten mechanischen Steuermechanismus (130),
- die ausschließlich mechanische Kraft zu übertragen, um den ersten mechanischen Haltemechanismus (140) freizugeben, derart dass die indexierte Position derart entsperrt wird, dass die Arme (121) sich frei um die erste Schwenkachse (110) drehen können.

2. Abschleppstange (100) nach Anspruch 1, wobei der erste mechanische Haltemechanismus (140) einen Indexierungsfinger und eine Rastung (141) umfasst, die dazu ausgestaltet ist, mit dem Indexierungsfinger zusammenzuwirken, wobei die indexierten Positionen auf diskrete Weise aufeinanderfolgen.

3. Abschleppstange (100) nach Anspruch 2, wobei die Rastung (141) auf der Oberfläche des Umkreises mindestens eines der Arme (121) eingerichtet ist.

4. Abschleppstange (100) nach einem der Ansprüche 1 bis 3, wobei das Rollfahrwerk (120) dazu ausgestaltet ist, mindestens eine dritte Position, die sogenannte teilweise eingezogene Position, einzunehmen, in der die Bodenkontaktelemente sich in einem Abstand von dem Hauptkörper befinden, der zwischen dem Mindestabstand und dem Höchstabstand enthalten ist.

5. Abschleppstange (100) nach einem der Ansprüche 1 bis 4, die ferner mindestens einen festen Griff (160) umfasst, der an dem Hauptkörper in unmittelbarer Nachbarschaft zum ersten mechanischen Steuermechanismus (130) angeordnet ist, wobei der feste Griff (160) dazu ausgestaltet ist, durch mindestens einen Teil der Hand eines Bedieners ergriffen zu werden, derart dass es dem Bediener erlaubt wird, bei der Betätigung des ersten mechanischen Steuermechanismus (130) eine Auflagekraft auszuüben.

6. Abschleppstange (100) nach einem der Ansprüche 1 bis 5, wobei mindestens ein Teil des Hauptkörpers, der sogenannte vordere Teil, der das vordere Ende umfasst, einen im Wesentlichen quadratischen oder rechteckigen Querschnitt aufweist, wobei der gesamte vordere Teil oder ein Teil davon hohl ist und ein Innenvolumen definiert, das so ausgestaltet ist, dass eine Dämpfungsstangenanordnung (170) zumindest teilweise darin aufgenommen wird, wobei die Dämpfungsstangenanordnung (170) umfasst
- eine Stange (171),
- einen festen Anschlag (172), und
- eine Dämpfungsvorrichtung (173), die auf koaxiale Weise fest mit der Stange (171) verbunden ist und zwischen der Stange (171) und dem festen Anschlag (172) eingefügt ist, um eine horizontale Ausfederung derart zuzulassen, dass dynamische Beanspruchungen gedämpft werden.

7. Abschleppstange (100) nach Anspruch 6, wobei die Dämpfungsvorrichtung (173) mechanische, hydraulische und/oder pneumatische elastische Dämpfungselemente (1731) umfasst.

8. Abschleppstange (100) nach einem der Ansprüche 6 bis 7, wobei die Dämpfungsanordnung (173) einen im Wesentlichen kreisförmigen Querschnitt aufweist.

9. Abschleppstange (100) nach einem der Ansprüche 1 bis 8, wobei der Hauptkörper aufweist:
- einen vorderen Teil, der das vordere Ende umfasst,
- einen hinteren Teil, der das hintere Ende umfasst, und
- einen Zwischenteil, der das Rollfahrwerk (120) umfasst und der den vorderen Teil und den hinteren Teil miteinander verbindet, wobei der Zwischenteil mindestens einen ersten gekrümmten Abschnittsteil, A, mit einer Konvexität aufweist, die hin zum Boden ausgerichtet ist, wobei der vordere Teil und der hintere Teil sich in Bezug auf den Zwischenteil in einer angehobenen Position befinden.

10. Abschleppstange (100) nach einem der Ansprüche 1 bis 8, wobei der Hauptkörper aufweist:
- einen vorderen Teil, der das vordere Ende umfasst, und
- einen hinteren Teil, der das hintere Ende und das Rollfahrwerk (120) umfasst, wobei der vordere Teil mindestens einen zweiten gekrümmten Abschnittsteil, B, mit einer Konvexität aufweist, die hin zum Boden ausgerichtet ist.

11. Abschleppstange (100) nach Anspruch 10, wobei der zweite gekrümmte Abschnittsteil, B, mindestens ein zweites Bodenkontaktelement (180) umfasst, das dazu ausgestaltet ist, den zweiten gekrümmten Abschnittsteil, B, am Boden zu verlagern, wenn er mit dem Boden in Kontakt ist.

12. Abschleppstange (100) nach einem der Ansprüche 10 bis 11, wobei der vordere Teil einen ersten manuellen Haltegriff (190) umfasst, der in unmittelbarer Nachbarschaft zum hinteren Teil angeordnet ist, wobei der erste manuelle Haltegriff (190) dazu ausgestaltet ist, den zweiten gekrümmten Abschnittsteil, B, zu handhaben.

13. Abschleppstange (100) nach einem der Ansprüche 1 bis 12, wobei, wenn die Abschleppstange (100) eigens dazu ausgestaltet ist, sich mit einem vorderen Landefahrwerk eines Luftfahrzeugs am Boden zu verbinden, das hintere Ende des Hauptkörpers einen ersten Befestigungskopf, C, umfasst, der einen Querschnitt, der allgemein U- oder C-förmig ist, mit zwei Längsarmen (121) und einem Querarm (121) aufweist, wobei das freie Ende jedes Längsarms (121) mindestens einen zweiten manuellen Haltegriff (191) umfasst, wobei die zweiten manuellen Haltegriffe (191) derart angeordnet sind, dass sie eine Vorpositionierung des ersten Befestigungskopfs, C, in Bezug auf einen Verbindungspunkt am vorderen Landefahrwerk erlauben.

14. Abschleppstange (100) nach einem der Ansprüche 1 bis 12, wobei, wenn die Abschleppstange (100) eigens dazu ausgestaltet ist, mit einem vorderen Fahrwerksbein eines Luftfahrzeugs am Boden ineinanderzugreifen, das hintere Ende des Hauptkörpers einen zweiten Befestigungskopf, D, umfasst, der umfasst:
- eine Aufnahme (192), die sich quer durch den zweiten Befestigungskopf, D, erstreckt und in die mindestens ein Teil des vorderen Fahrwerksbeins in Eingriff gelangt,
- eine zweite Schwenkachse (193), die fest mit dem zweiten Befestigungskopf, D, verbunden ist und die sich quer durch den zweiten Befestigungskopf, D, erstreckt, und
- einen zweiten mechanischen Haltemechanismus (194), der dazu ausgestaltet ist, drehbar um die zweite Schwenkachse (193) zu kippen zwischen:
- einer offenen Position, die es dem Teil des vorderen Fahrwerksbeins erlaubt, in die Aufnahme (192) einzudringen und in welcher der zweite mechanische Haltemechanismus (194) im Wesentlichen vollständig in einer Seitenwand (1921) der Aufnahme (192) untergebracht ist, und
- einer geschlossenen Position, in welcher der zweite mechanische Haltemechanismus (194) den Ausgang der Aufnahme (192) sperrt, wodurch somit ein Teil des vorderen Fahrwerksbeins im Inneren der Aufnahme (192) verriegelt wird, und in welcher der zweite mechanische Haltemechanismus (194) im Wesentlichen vollständig in Bezug auf die Seitenwand (1921) der Aufnahme (192) hervorsteht.

## Claims

1. A tow bar (100) specifically designed to connect to a nose landing gear or to engage with a nose wheel strut of an aircraft on the ground, so as to tow or push the aircraft, the tow bar (100) comprising:
- a main body which extends longitudinally between a first end for attachment to the aircraft, referred to as the rear end, and a second end for attachment to a towing vehicle, referred to as the front end, the front end being opposite the rear end, the main body having a desired weight,
- a first pivot pin (110) integral with the main body and extending transversely through the main body,
- a running gear (120) which comprises a pair of arms (121) which are angularly adjustable relative to the main body and which are integrally connected to each other in parallel, each arm (121) having a proximal portion and a distal portion,
- each distal portion carrying at least a first ground contact element (122) which is designed for moving the main body over the ground, when it is in contact with the ground,
- each proximal portion being coupled to the first pivot pin (110) so as to be freely rotatable thereabout, allowing the running gear (120) to occupy a succession of indexed positions which lie between:
- a first extreme position, referred to as the folded-away position, in which the ground contact elements are located at a minimum distance from the main body, and
- a second extreme position, referred to as the deployed position, in which the ground contact elements are located at a maximum distance from the main body,
**characterised by**,
- a mechanical device for indexing the position of the running gear (120) comprising:
- a first mechanical control mechanism (130), producing an exclusively mechanical force, which is designed to be movable between a first position and a second position, by direct transmission of at least one manual translational movement or one manual rotational movement,
- a first mechanical holding mechanism (140) which comprises a first elastic return device designed to bring the first mechanical holding mechanism (140) to the various indexed positions, the first mechanical holding mechanism (140) being designed, when subjected to the effect of the weight of the main body, to block the various indexed positions so that the arms (121) cannot rotate freely about the first pivot pin (110),
- a first mechanical control transmission mechanism (150) designed to kinematically connect the first mechanical control mechanism (130) and the first mechanical holding mechanism (140),
wherein,
the mechanical indexing device is designed:
- in response to the manual raising of the front end of the main body, relative to the ground, to at least partially relieve the first mechanical holding mechanism (140) of the effect of the weight of the main body, and subsequently actuating the first mechanical control mechanism (130),
- to transmit the exclusively mechanical force to release the first mechanical holding mechanism (140), so as to unblock the indexed position so that the arms (121) can rotate freely about the first pivot pin (110).

2. The tow bar (100) according to claim 1, wherein the first mechanical holding mechanism (140) comprises an indexing finger and a notching (141) designed to cooperate with the indexing finger, the indexed positions succeeding one another in a discrete manner.

3. The tow bar (100) according to claim 2, wherein the notching (141) is formed on the surface of the periphery of at least one of the arms (121).

4. The tow bar (100) according to any one of claims 1 to 3, wherein the running gear (120) is designed to occupy at least a third position, referred to as the partially retracted position, in which the ground contact elements are located at a distance from the main body that is between the minimum distance and the maximum distance.

5. The tow bar (100) according to any one of claims 1 to 4, further comprising at least one fixed handle (160) which is disposed on the main body in the immediate vicinity of the first mechanical control mechanism (130), the fixed handle (160) being designed to be gripped by at least part of an operator's hand, so as to enable the operator to exert a supporting force when actuating the first mechanical control mechanism (130).

6. The tow bar (100) according to any one of claims 1 to 5, wherein at least part of the main body, referred to as the front portion, which includes the front end, has a substantially square or rectangular cross-section, all or part of the front portion being hollow and defining an internal volume which is designed for a shock absorbing drawbar assembly (170) to be housed at least partially therein, the shock absorbing drawbar assembly (170) comprising:
- a drawbar (171),
- a fixed stop (172), and
- a damping device (173), integral with the drawbar (171) in a coaxial manner, which is interposed between the drawbar (171) and the fixed stop (172) to allow horizontal movement so as to damp dynamic stresses.

7. The tow bar (100) according to claim 6, wherein the damping device (173) comprises elastic, mechanical, hydraulic and/or pneumatic damping elements (1731).

8. The tow bar (100) according to either of claims 6 or 7, wherein the damping device (173) has a substantially circular cross-section.

9. The tow bar (100) according to any one of claims 1 to 8, wherein the main body has:
- a front portion which includes the front end,
- a rear portion which includes the rear end, and
- an intermediate portion which includes the running gear (120) and which connects the front portion and the rear portion together, the intermediate portion having at least a first curved-section portion, A, with a convexity which is oriented towards the ground, wherein the front portion and the rear portion are in a raised position with respect to the intermediate portion.

10. The tow bar (100) according to any one of claims 1 to 8 wherein, the main body has:
- a front portion which includes the front end, and
- a rear portion which includes the rear end and the running gear (120), the front portion having at least a second curved-section portion, B, with a convexity which is oriented towards the ground.

11. The tow bar (100) according to claim 10, wherein the second curved-section portion, B, comprises at least one second ground contact element (180) which is designed to move the second curved-section portion, B, on the ground, when it is in contact with the ground.

12. The tow bar (100) according to either of claims 10 or 11, wherein the front portion comprises a first manual handling handle (190) which is disposed in the immediate vicinity of the rear portion, the first manual handling handle (190) being designed to handle the second curved-section portion, B.

13. The tow bar (100) according to any one of claims 1 to 12, wherein when the tow bar (100) is specifically designed to connect to a nose landing gear of an aircraft to the ground, the rear end of the main body comprises a first attachment head, C, which has a section with a cross-section that is generally U-shaped or C-shaped having two longitudinal arms (121) and one transverse arm (121), the free end of each longitudinal arm (121) comprising at least one second manual handling handle (191), the second manual handling handles (191) being arranged so as to allow pre-positioning of the first attachment head, C, relative to a connection point on the nose landing gear.

14. The tow bar (100) according to any one of claims 1 to 12, wherein when the tow bar (100) is specifically designed to engage with a nose wheel strut of an aircraft on the ground, the rear end of the main body comprises a second attachment head, D, which comprises:
- a housing (192) which extends transversely through the second attachment head, D, and in which at least part of the nose wheel strut engages,
- a second pivot pin (193) integral with the second attachment head, D, and extending transversely through the second attachment head, D, and
- a second mechanical holding mechanism (194) which is designed to tilt in rotation about the second pivot pin (193) between,
- an open position allowing the part of the nose wheel strut to enter the housing (192), and in which the second mechanical holding mechanism (194) is housed substantially entirely in a side wall (1921) of the housing (192), and
- a closed position in which the second mechanical holding mechanism (194) blocks the exit from the housing (192), thereby locking part of the nose wheel strut inside the housing (192), and in which the second mechanical holding mechanism (194) is positioned substantially entirely projecting with respect to the side wall (1921) of the housing (192).
